# EUROPÄISCHE PATENTSCHRIFT

(11) **EP 4 246 277 B1**
(45) Veröffentlichungstag und Bekanntmachung des Hinweises auf die Patenterteilung: **07.05.2025**
(21) Anmeldenummer: 23161471.0
(22) Anmeldetag: 13.03.2023
(51) Int. Cl.: G05D 23/02

(54) **REGULIERVENTIL FÜR WASSER-ZIRKULATIONSSYSTEME**
CONTROL VALVE FOR WATER CIRCULATION SYSTEMS
SOUPAPE DE RÉGULATION POUR SYSTÈMES DE CIRCULATION D'EAU

(30) Priorität: 14.03.2022 DE 202022101366 U
(43) Veröffentlichungstag der Anmeldung: 20.09.2023
(73) Patentinhaber: Gebr. Kemper GmbH + Co. KG, 57462 Olpe (DE)
(72) Erfinder: FRIES, Stefan, 57462 Olpe (DE)
(74) Vertreter: Grünecker Patent- und Rechtsanwälte PartG mbB

(56) Entgegenhaltungen:
- DE-A1- 10 313 278
- DE-B4- 102006 059 577

## Beschreibung

Die vorliegende Erfindung liegt auf dem Gebiet der Regulierventile für Wasser-Zirkulationssysteme. Insbesondere nimmt die vorliegende Erfindung solche Regulierventile in den Blick, die ein durch die Wassertemperatur gesteuertes Dehnstoffelement als Temperaturweggeber für ein Regelglied zur wassertemperaturabhängigen Regulierung einer Wasserdurchflussmenge durch das Ventil sowie eine Einstellmöglichkeit zur Voreinstellung eines Regulierspaltes haben.

Ein Regulierventil mit den oberbegrifflichen Merkmalen von Anspruch 1 ist beispielsweise aus DE 103 13 278 A1, WO 2017/021789 A1, DE 10 2005 038 699 B4, DE 10 2006 059 577 B4 oder EP 1 947 395 B1 bekannt, welche noch Raum zur Verbesserung lassen.

Eine Aufgabe der vorliegenden Erfindung ist es, ein verbessertes Regulierventil zur Regulierung der Wasserdurchflussmenge in Wasser-Zirkulationssystemen anzugeben. Insbesondere will die vorliegende Erfindung ein robustes Regulierventil angeben, dessen Regulierfunktion möglichst störunanfällig ist und das einfach zu handhaben ist.

Zur Lösung dieser Aufgabenstellung gibt die vorliegende Erfindung ein Regulierventil für Wasser-Zirkulationssysteme mit den Merkmalen von Anspruch 1 an.

Es zeichnet sich durch ein den Ventilsitz ausbildendes Ventilsitzelement aus, das im Regulierbetrieb von dem Regelglied axial durchsetzt ist und zur Voreinstellung eines Regulierspaltes axial verschieblich in dem Ventileinsatz gehalten ist. Dabei ist die axiale Richtung in der Regel durch die Längsachse des Ventileinsatzes und/oder die Bewegungsrichtung des Regelglieds vorgegeben. Üblicherweise stimmen die Längsachse des Ventileinsatzes und die Bewegungsrichtung des Regelglieds überein. Dabei lässt sich die Erfindung insbesondere von der Überlegung leiten, dass durch Voreinstellung im Sinne einer Drehung eines Ventileinsatz-Oberteils und/oder eines Ventileinsatz-Mittelteils relativ zu einem Ventileinsatz-Unterteil das in dem Ventileinsatz-Unterteil angeordnete Ventilsitzelement axial verlagert und dabei der durch das Ventilsitzelement gebildete Regulierspalt verändert werden kann. Die Veränderung des Regulierspaltes erfolgt dabei üblicherweise durch Zwangsführung an einer Führungsfläche im Ventileinsatz-Unterteil, die in Bezug auf das Ventilsitzelement üblicherweise ortsfest ist und einen schrägen und/oder gestuften Verlauf hat, durch den die Halterung des Ventilsitzelements vorgegeben und insbesondere das radiale Aufweiten des Ventilsitzelementes beschränkt ist. Diese Relativbewegung durch Drehen außen an dem Regulierventil erlaubt eine Voreinstellung des Regulierspaltes und damit des Kv-Wertes. Die Führungsfläche für die Zwangsführung kann durch das Ventileinsatz-Unterteil ausgebildet sein oder durch eine separate Gleitschale, vorzugsweise aus Kunststoff, die in das Ventileinsatz-Unterteil aufgenommen und dichtend mit dem Ventileinsatz-Unterteil verbunden sein kann.

Vorzugsweise ist das erfindungsgemäße Regulierventil zur Regulierung eines Wasserdurchflusses in Warmwasserleitungen mit Warmwasserzirkulation angepasst ausgebildet.

Meist ist ein Ventilkörper, z. B. ein Ventilkegel vorgesehen, der in der Regel mittels eines Ventilschafts gegen das Dehnstoffelement unter Vorspannung angelegt ist. Für gewöhnlich bilden der Ventilkörper und der Ventilschaft zusammen das Regelglied. Der Ventilkörper und der Ventilschaft können als separate Bauteile, die miteinander verbunden sind, oder als einteiliges Bauteil ausgebildet sein.

In an sich bekannter Weise dehnt sich das Dehnstoffelement bei steigender Temperatur gegen die Vorspannung aus und stellt das Regelglied in axialer Richtung zum Ventilsitz hin. Bei sinkender Temperatur zieht sich das Dehnstoffelement entsprechend zusammen und das Regelglied bewegt sich in axialer Richtung weg von dem Ventilsitz. Zur Stabilisierung dieser Stellbewegung kann der Ventileinsatz ein Mittel zur Führung des Regelglieds aufweisen. Diese Mittel können durch Führungsflächen gebildet sein.

In einem Regulierbetrieb durchsetzt das Regelglied den durch das Ventilsitzelement ausgebildeten Ventilsitz. Dabei variiert die Stärke der Durchsetzung, d.h. die Durchsetzungstiefe des Ventilsitzes durch das Regelglied mit der Wassertemperatur, wobei eine größere Durchsetzungstiefe einen kleineren Kv-Wert und eine kleinere Durchsetzungstiefe einen größeren Kv-Wert bewirkt. In dem Regulierbetrieb liegen die Wassertemperaturen bei einem Warmwasser-Zirkulationssystem üblicherweise in einem Bereich von ca. 50-65°C.

Vorzugsweise ist die Lage des Dehnstoffelements von außen durch eine Stellvorrichtung einstellbar. In der Regel kann über die Stellvorrichtung eine Wassertemperatur eingestellt werden, bei der das Regelglied im Regulierbetrieb den Ventilsitz so durchsetzt, dass der Regulierspalt minimal wird und die Wasserdurchflussmenge auf einen Restvolumenstrom reduziert ist. Die Größe des Restvolumenstroms ist in der Regel so gewählt, dass Wärmeverluste einer Warmwasserzirkulation ausgeglichen werden können. Dadurch wird zu jeder Zeit eine Zirkulation von Warmwasser gewährleistet, sodass kein Wasser im Warmwasser-Leitungssystem stehen und abkühlen kann.

Die Länge von Zirkulationsleitungen sowie die Gesamtgröße von Zirkulationssystemen sind mitunter verschieden, sodass der geforderte Restvolumenstrom je nach Auslegung des jeweiligen Zirkulationssystems unterschiedlich ist. Der Restvolumenstrom ist daher mit dem erfindungsgemäßen Regulierventil durch Voreinstellung des Regulierspaltes einstellbar.

Hierfür ist das Ventilsitzelement zur Voreinstellung des Regulierspaltes axial verschieblich und/oder elastisch verformbar in dem Ventileinsatz gehalten. Durch die Verschiebung und/oder die elastische Verformung kann der Regulierspalt um ein von der Stellung des Regelglieds unabhängiges Maß vergrößert oder verkleinert werden.

Der Regulierspalt im Regulierbetrieb kann durch einen Spalt zwischen dem Ventilsitzelement und dem Regelglied gebildet sein, dessen Größen und gegebenenfalls auch Form sich durch die Verschiebung und/oder elastische Verformung des Ventilsitzelements verändert. Der Spalt kann sich in radialer Richtung zwischen dem Ventilsitzelement und dem Regelglied und in Umfangsrichtung außenumfänglich um das Regelglied herum erstrecken.

Nach einer bevorzugten Weiterbildung der vorliegenden Erfindung verformt sich das Ventilsitzelement, vorzugsweise bei einer axialen Verschiebung, elastisch, wodurch sich die Größe des Regulierspaltes ändert. Weiter bevorzugt kann die Größe des Regulierspalts entsprechend dem Maß der Verschiebung und/oder dem Maß der elastischen Verformung stufenlos verändert werden. Sehr bevorzugt kann ein Bedienelement zur Voreinstellung des Regulierspaltes vorgesehen sein, das eine Skala mit einzelnen diskreten Kv-Werten in Bezug auf den Restvolumenstrom aufweist, um die Voreinstellung zu erleichtern. Die Skala kann beispielsweise eine Zahlenreihe bestehend aus natürlichen Zahlen anzeigen, die je einem speziellen Kv-Wert des Restvolumenstroms entsprechen und in aufsteigender oder absteigender Reihenfolge der Zahlenreihe zugeordnet sind. Beispielsweise kann die Skala die Zahlen 1, 2 und 3 anzeigen.

Nach einer weiteren bevorzugten Weiterbildung der vorliegenden Erfindung verformt sich das Ventilsitzelement, vorzugsweise bei einer axialen Verschiebung, elastisch so, dass sich dabei der Innendurchmesser des Ventilsitzelementes verändert. Dabei hat das Ventilsitzelement vorzugsweise im Wesentlichen die Form eines Rings. Der Regulierspalt kann als Ringspalt zwischen dem Ventilsitzelement und dem Regelglied gebildet sein. Eine Verringerung des Innendurchmessers des Ventilsitzelements führt demnach unmittelbar zu einer Verkleinerung des Regulierspaltes. Dabei wird der Ring außen umfänglich üblicherweise dicht, insbesondere abgedichtet in einem Regulierabschnitt des Ventileinsatzes geführt und gehalten, der die oben erwähnte Führungsfläche ausbilden kann.

Nach einer weiteren bevorzugten Weiterbildung der vorliegenden Erfindung wird dem Ventilsitzelement durch die elastische Verformung eine elastische Rückstellkraft aufgeprägt, die bewirkt, dass das Ventilsitzelement ohne äußere Krafteinwirkung in seine Ausgangslage zurückfedert. Dies hat den Vorteil, dass zur Verschiebung des Ventilsitzelements nur in eine Richtung Druck auf das Ventilsitzelement ausgeübt werden muss und eine Verschiebung in die entgegengesetzte Richtung durch das elastische Zurückspringen erfolgt.

Nach einer weiteren bevorzugten Weiterbildung der vorliegenden Erfindung ist das Ventilsitzelement als geschlitzter Ring ausgebildet. Der Schlitz unterbricht den Ring in Umfangsrichtung. Der Schlitz erstreckt sich dabei üblicherweise streng radial in Bezug auf den Mittelpunkt des Rings. Weiter bevorzugt wird der Schlitz bei einer axialen Verschiebung und elastischer Verformung des Ventilsitzelements in seiner Größe verändert. Verkleinert sich der Schlitz, verkleinert sich auch der Innendurchmesser des Rings, sodass der Regulierspalt kleiner wird. Vergrößert sich der Schlitz, vergrößert sich auch der Innendurchmesser des Rings, sodass der Regulierspalt größer wird.

Nach einer weiteren bevorzugten Weiterbildung der vorliegenden Erfindung ist das Ventilsitzelement in einem konusförmigen Regulierabschnitt des Ventileinsatzes bzw. einem hohlkegelstumpfförmigen Regulierabschnitt des Ventileinsatzes gehalten. Es liegt der in Regel an der Innenumfangsfläche dieses Regulierabschnitts an, der vorzugsweise von der eingangs genannten Gleitschale ausgebildet wird. Das Ventilsitzelement wird bei einer Verschiebung in Verjüngungsrichtung des Regulierabschnitts zur Reduzierung seines Außendurchmessers gezwungen, was durch elastische Verformung des Ventilsitzelements erfolgt. Im Falle des geschlitzten ringförmigen Ventilsitzelements bewirkt die Verformung bei der Verschiebung in Verjüngungsrichtung, dass sich der Schlitz verkleinert, wodurch sich der Innendurchmesser des Ventilsitzelements und damit auch der Regulierspalt verkleinern. Dabei verjüngt sich der Regulierabschnitt üblicherweise in einer Richtung entgegengesetzt der Lage des Dehnstoffelementes. Der Regulierabschnitt kann in Verjüngungsrichtung in eine Ringschulter übergehen, auf der ein O-Ring zur außenumfänglichen Abdichtung des Ventilsitzelements aufliegen kann. Das Ventilsitzelement kann bereits in seiner Ausgangslage mit einer gewissen Vorspannung und für gewöhnlich unter Zwischenlage eines Abstandshalters an dem O-Ring anliegen.

Nach einer weiteren bevorzugten Weiterbildung der vorliegenden Erfindung umfasst der Ventileinsatz ein Ventileinsatz-Unterteil, das fest, insbesondere drehfest mit dem Ventilgehäuse verbunden ist, das eine Eingangsöffnung und eine Ausgangsöffnung aufweist und mit seinem die Eingangsöffnung ausbildenden Ende dichtend in eine Durchgangsöffnung im Inneren des Ventilgehäuses zwischen dem Eingangskanal und dem Ausgangskanal eingesetzt ist. Das Ventileinsatz-Unterteil ist üblicherweise in eine Bohrung des Ventilgehäuses eingesetzt und darin verbunden, bevorzugt damit verschraubt, und gegenüber der Bohrung abgedichtet. Die Durchgangsöffnung im Inneren des Ventilgehäuses kann in Verlängerung der Bohrung und/oder quer, insbesondere im rechten Winkel zu zumindest einem der Kanäle (Eingangs- und Ausgangskanal) ausgebildet sein. Das Ventileinsatz-Unterteil bzw. der Ventileinsatz insgesamt kann als längliches und im Wesentlichen rotationssymmetrisches Bauteil ausgebildet sein.

Nach einer weiteren bevorzugten Weiterbildung der vorliegenden Erfindung ist die Ausgangsöffnung als Umfangsöffnung ausgebildet und/oder quer zur Eingangsöffnung orientiert. Zwischen der Eingangsöffnung und der Ausgangsöffnung, die voneinander in axialer Richtung beabstandet sind, ist das Ventilsitzelement vorgesehen. Die durch das Ventilsitzelement definierte Öffnung, die im Regulierbetrieb von dem Regelglied durchsetzt ist, ist bevorzugt koaxial zur Eingangsöffnung. Die Ausgangsöffnung kann durch ein oder mehrere vorzugsweise fensterförmige Öffnungen in einer Umfangswandung des Ventileinsatz-Unterteils ausgebildet sein. Die Orientierung von zumindest einer dieser Öffnungen kann mit der Orientierung des Ausgangskanals übereinstimmen.

Nach einer weiteren bevorzugten Weiterbildung der vorliegenden Erfindung umfasst der Ventileinsatz ein Ventileinsatz-Mittelteil, das das Regelglied in sich aufnimmt, von dem Ventileinsatz-Unterteil getragen wird und in axialer Richtung relativ zum Ventileinsatz-Unterteil stellbar ist. Für gewöhnlich ist das Ventileinsatz-Mittelteil in das Ventileinsatz-Unterteil eingesetzt. In der Regel wird der Ventilkörper von einem Ventilschaft getragen, der dichtend durch ein freies Ende des Ventileinsatz-Mittelteils hindurchgeführt ist. Für gewöhnlich bilden der Ventilkörper und der Ventilschaft zusammen das Regelglied.

Das Ventileinsatz-Mittelteil ist üblicherweise außenumfänglich gegenüber dem Ventileinsatz-Unterteil abgedichtet. Das Ventileinsatz-Mittelteil kann zur Veränderung der axialen Position relativ zu dem Ventileinsatz-Unterteil mit dem Ventileinsatz-Unterteil in Gewindeeingriff stehen, wobei die Einschraubhöhe des Ventileinsatz-Mittelteils in das Ventileinsatz-Unterteil einstellbar ist.

Nach einer weiteren bevorzugten Weiterbildung der vorliegenden Erfindung wird durch die Stellbewegung des Ventileinsatz-Mittelteils das Ventilsitzelement axial verschoben und/oder elastisch verformt. Vorzugsweise wird bei einer Stellbewegung des Ventileinsatz-Mittelteils in Richtung des Ventilsitzelements ein Druck auf das Ventilsitzelement ausgeübt, der bei einer Stellbewegung des Ventileinsatz-Mittelteils in entgegengesetzter Richtung wieder abnimmt.

Das erfindungsgemäße Regulierventil kann so ausgebildet sein, dass das Ventilsitzelement durch eine Stellbewegung des Ventileinsatz-Mittelteils in axialer Richtung verschoben wird und dabei seinen Innendurchmesser verändert, was unmittelbar zu einer Veränderung des Regulierspaltes führt. Um ungewollte Leckagen zu vermeiden, kann das Ventilsitzelement bereits in seiner Ausgangslage mit einer gewissen Vorspannung, die durch entsprechende Einstellung der axialen Position des Ventilsitz-Mittelteils bewirkt wird, für gewöhnlich unter Zwischenlage eines Abstandshalters an einem O-Ring anliegen, der in der Regel auf einer Ringschulter aufliegt, in die der Regulierabschnitt übergeht. Der O-Ring bewirkt eine außenumfängliche Abdichtung des Ventilsitzelements. Er wird üblicherweise bei einer Verschiebung des Ventilsitzelements zu dem O-Ring hin komprimiert. Das Ventilsitzelement kann einen Flansch aufweisen, der einen Flansch des Abstandshalters außenumfänglich umgibt.

Nach einer weiteren bevorzugten Weiterbildung der vorliegenden Erfindung umfasst das Regulierventil einen mit dem freien Ende des Ventileinsatz-Mittelteils verbundenen Druckring zur Ausübung eines Drucks auf das Ventilsitzelement zur Verschiebung und/oder elastischen Verformung des Ventilsitzelementes. In der Regel liegt der Druckring auf der dem Dehnstoffelement zugewandten Seite des Ventilsitzelements an dem Ventilsitzelement an. Der Druckring kann durch sich in axialer Richtung erstreckende Stege mit dem freien Ende des Ventileinsatz-Mittelteils verbunden, vorzugsweise einteilig ausgebildet sein. Der Druckring kann einen von seinem Außenumfang hervorstehenden Rand als Anschlag haben, der zur Begrenzung der axialen Stellbewegung des Ventileinsatz-Mittelteils mit dem Ventileinsatz-Unterteil, insbesondere dem Regulierabschnitt zusammenwirkt.

Nach einer weiteren bevorzugten Weiterbildung der vorliegenden Erfindung ist ein Innendurchmesser des Druckrings größer als ein Außendurchmesser des Regelglieds.

Nach einer weiteren bevorzugten Weiterbildung der vorliegenden Erfindung ist der Ventilkörper in einem Desinfizierbetrieb zur thermischen Desinfektion des Regulierventils vollständig auf eine dem Dehnstoffelement gegenüberliegende Seite des Ventilsitzes bringbar. Dabei wird durch die Weggebung des Dehnstoffelementes bei sehr hohen Wassertemperaturen eine durch das Ventilsitzelement definierte Öffnung zum Wasserdurchfluss in der Regel größtenteils bzw. maximal freigegeben. Damit ist es möglich, das Regulierventil mit großem Volumenstrom zur thermischen Desinfektion und sehr hohen Wassertemperaturen zu durchspülen. Die sehr hohen Wassertemperaturen für den Desinfizierbetrieb liegen üblicherweise über 65 °C.

Nach einer weiteren bevorzugten Weiterbildung der vorliegenden Erfindung umfasst das Regelglied einen Ventilkörper mit einer vom Außenumfang des Ventilkörpers hervorstehenden Regulierkante, wobei das Regulierventil so ausgebildet ist, dass die Regulierkante bei einer an einem Ventileinsatz-Oberteil einstellbaren Wassertemperatur in das Ventilsitzelement eintaucht. Die Regulierkante ist vorzugsweise auf mittlerer axialer Höhe des Ventilkörpers vorgesehen. Sie kann an einem schrägen, den Ventilkörper verjüngenden Abschnitt des Ventilkörpers angeformt sein.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Längsschnittansicht eines Ventileinsatzes,
- Fig. 2: eine Draufsicht auf das Ventilsitzelement des Ventileinsatzes aus Fig. 1,
- Fig. 3: eine Schnittansicht zum Schnitt gemäß Schnittlinie B-B in Fig. 1,
- Fig. 4: eine vergrößerte Ansicht des Details C aus Fig. 1,
- Fig. 5: eine Längsschnittansicht eines Regulierventils mit dem Ventileinsatz aus Fig. 1, und
- Fig. 6: eine Längsschnittansicht des Ventileinsatzes aus Fig. 1 ohne Ventileinsatz-Unterteil.

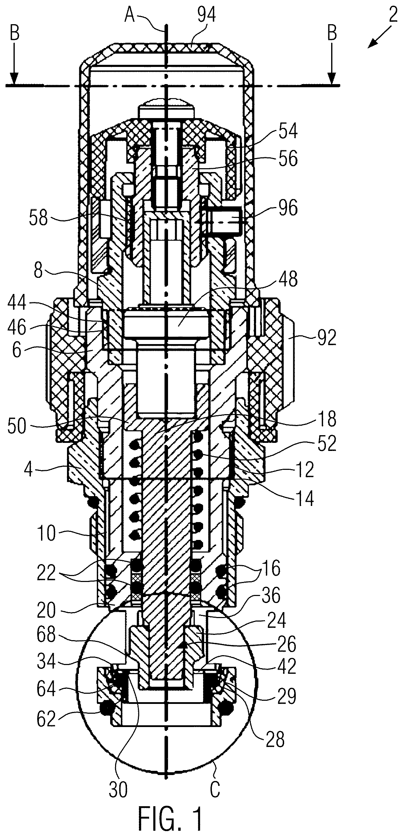

Die Figur 1 zeigt eine Längsschnittansicht eines Ventileinsatzes 2, der ein Ventileinsatz-Unterteil 4, ein Ventileinsatz-Mittelteil 6 und ein Ventileinsatz-Oberteil 8 umfasst. Das Ventileinsatz-Mittelteil 6 ist höhenverstellbar in einen Aufnahmeraum 10 des Ventileinsatz-Unterteils 4 aufgenommen. Die Höhenverstellbarkeit ist durch die Veränderbarkeit der Einschraubtiefe eines Außengewindes 12 am Ventileinsatz-Mittelteil 6 in ein Innengewinde 14 am Ventileinsatz-Unterteil 4 realisiert. Unterhalb des Außengewindes 12 trägt das Ventileinsatz-Mittelteil 6 zwei Dichtringe 16 zur fluiddichten Abdichtung gegenüber dem Ventileinsatz-Unterteil 4.

Ein Ventilschaft 18 ist durch das freie Ende 20 des Ventileinsatz-Mittelteils 6 hindurchgeführt, wobei die Durchführöffnung mit Dichtringen 22 abgedichtet ist. An seinem freien Ende trägt der Ventilschaft 18 einen als Ventilkegel ausgebildeten Ventilkörper 24. Der Ventilschaft 18 und der Ventilkörper 24 bilden zusammen ein Regelglied 26.

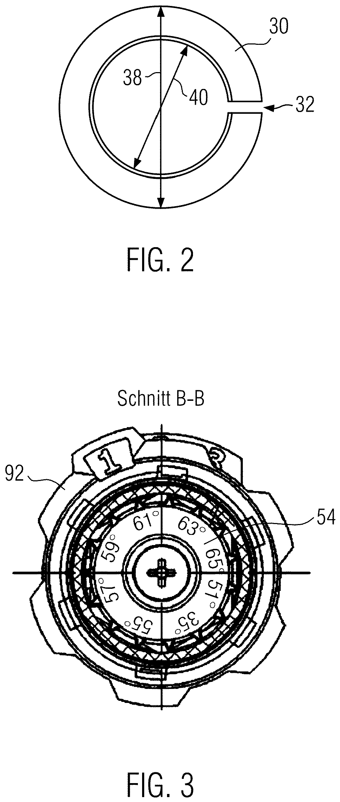

Der Ventilkörper 24 des Regelglieds 26 ist auf Höhe eines konusförmigen bzw. hohlkegelstumpfförmigen Regulierabschnitts 28 des Ventileinsatz-Unterteils 4 vorgesehen, der durch eine Gleitschale 29 aus Kunststoff ausgebildet ist, die fluiddicht in das Ventileinsatz-Unterteil 4 eingesetzt ist. In diesem Regulierabschnitt 28 ist ein einen Ventilsitz bildendes Ventilsitzelement 30 axial verschieblich gehalten. Das Ventilsitzelement 30 ist als elastisch verformbarer, geschlitzer Ring ausgebildet (s. Fig. 2). Der Schlitz unterbricht den Ring in Umfangsrichtung und ist mit Bezugszeichen 32 gekennzeichnet. In einem Regulierbetrieb durchsetzt das Regelglied 26 das Ventilsitzelement 30.

Das freie Ende 20 des Ventileinsatz-Mittelteils 6 ist mit einem Druckring 34 verbunden, der den Ventilkörper 24 des Regelglieds 26 im Regulierbetrieb umfänglich umgibt und durch sich in axialer Richtung erstreckende Stege 36 einteilig am freien Ende 20 des Ventileinsatz-Mittelteils 6 angeformt ist. Die axiale Richtung entspricht der Längsachse des Ventileinsatzes 2, die mit Bezugszeichen A gekennzeichnet ist.

Durch Vergrößerung der Einschraubtiefe des Ventileinsatz-Mittelteils 6 in das Ventileinsatz-Unterteil 4 wird das Ventilsitzelement 30 durch den Druckring 34 weiter in das Ventileinsatz-Unterteil 4 gedrückt. Dabei verschiebt sich das Ventilsitzelement 30 in Verjüngungsrichtung des Regulierabschnitts 28 entlang der axialen Richtung A und wird gezwungen, durch elastische Verformung seinen Außendurchmesser 38 zu verringern. Dabei verkleinert sich der Schlitz 32, wodurch sich der Innendurchmesser 40 des Ventilsitzelements 30 (s. Fig. 2) verringert. Bei der elastischen Verformung wird dem Ventilsitzelement 30 eine elastische Rückstellkraft aufgeprägt, die bewirkt, dass das Ventilsitzelement 30 wieder in seine Ausgangsposition zurückspringt bzw. zurückstellt oder zurückgleitet, wenn der Druck durch den Druckring 34 nachlässt, indem die Einschraubtiefe des Ventileinsatz-Mittelteils 6 im Ventileinsatz-Unterteil 4 wieder verkleinert wird. Das Ventilsitzelement 30 folgt somit der Bewegung des Druckrings 34. Es kann insofern nur soweit in Richtung der Ausgangsposition zurückspringen bzw. sich dorthin zurückverschieben, wie es die Position des Druckrings 34 zulässt.

Zwischen dem Ventilkörper 24 des Regelglieds 26 und dem Ventilsitzelement 30 bleibt ein in Umfangsrichtung kontinuierlicher Ringspalt als Regulierspalt 42, dessen Ausdehnung nach radial außen durch den Innenumfang des Ventilsitzelements 30 und dessen Ausdehnung nach radial innen durch den Außenumfang des Ventilkörpers 24 auf Höhe des Ventilsitzelements 30 begrenzt ist. Durch die zuvor beschriebene Veränderung des Innendurchmessers 40 des Ventilsitzelements 30 durch axiale Verschiebung des Ventilsitzelements 30 im Regulierabschnitt 28 des Ventileinsatz-Unterteils 4 lässt sich die Ausdehnung des Regulierspaltes 42 nach radial außen hin einstellen. Diese Einstellung wird durch die temperaturgesteuerte Regelfunktion des Regulierventils nicht beeinflusst und stellt daher eine Voreinstellung des Regulierspalts 42 im Sinne der Erfindung dar. Die Voreinstellung kann stufenlos verstellt werden, da die Einschraubtiefe des Ventileinsatz-Mittelteils 6 in das Ventileinsatz-Unterteil 4 stufenlos ist. Die Stellbewegung des Ventileinsatz-Mittelteils 6 zur Voreinstellung verändert nicht den axialen Abstand zwischen dem Ventilsitzelement 30 und dem Regelglied 26, sodass die Kv-Wert Voreinstellung des Restvolumenstroms durch Voreinstellung des Regulierspaltes die temperaturabhängige Regelfunktion des Regulierventils abgesehen von der Verkleinerung oder Vergrößerung des Regulierspaltes nicht weiter beeinträchtigt.

Das Ventileinsatz-Oberteil 8 ist in das dem freien Ende 20 gegenüberliegende Ende des Ventileinsatz-Mitteilteils 6 eingesetzt und mit diesem verbunden. Hierfür weist das Ventileinsatz-Oberteil 8 ein Außengewinde 44 auf, das mit einem Innengewinde 46 des Ventileinsatz-Mittelteils 6 verbunden ist. Das Ventileinsatz-Oberteil 8 nimmt ein Dehnstoffelement 48 in sich auf, das an der Oberseite eines Tellers 50 anliegt, der von dem dem Ventilkörper 24 gegenüberliegenden Ende des Regelglieds 26 ausgebildet ist. An der Unterseite des Tellers 50 stützt sich eine Feder 52 ab. Das Regelglied 26 wirkt über den Teller 50 mit dem Dehnstoffelement 48 zusammen, das sich bei zunehmender Wassertemperatur entgegen der Federkraft der Feder 52 ausdehnt.

Eine Temperatur-Bedienkappe 54 wirkt mit einer Stellschraube 56 zusammen, die das Dehnstoffelement 48 innerhalb des Ventiloberteils 8 zur Änderung der Temperaturabhängigkeit des Regulierventils axial verschiebt. Die Stellschraube 56 ist mit einem Innengewinde 58 des Ventileinsatz-Oberteils 8 verbunden. Ein Anzeigering zeigt zusammen mit der Beschriftung der Bedienkappe 54 die eingestellte Temperatur an (siehe Fig. 3), bei der das Regelglied 26 den Regulierspalt 42 maximal verschleißt.

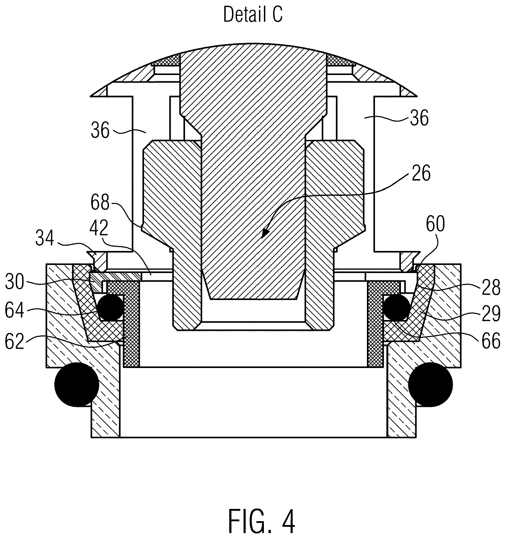

Das Ventilsitzelement 30 ist in Fig. 1 in seiner Ausgangslage gezeigt, die durch eine den Regulierabschnitt 28 in Richtung des Dehnstoffelements 48 begrenzende obere Ringschulter 60 vorgegeben ist und in der der Regulierspalt 42 auf ein Maximum voreingestellt ist (siehe Fig. 4). Der Schnitt zur Schnittansicht verläuft durch den Schlitz 32 des Rings 30, sodass der Ring 30 in Fig. 4 nur links des Regelglieds 26 sichtbar ist. In dieser Ausgangslage ist das Ventilsitzelement 30 bereits mit einer gewissen Vorspannung, die durch den Druck des Druckrings 34 ausgeübt wird, unter Zwischenlage eines Abstandshalters 62 an einem O-Ring 64 angelegt, der auf einer unteren Ringschulter 66 aufliegt, die den Regulierabschnitt 28 in der dem Dehnstoffelement 48 entgegengesetzten Richtung begrenzt. Der O-Ring 64 bewirkt eine außenumfängliche Abdichtung des Ventilsitzelements 30. Er wird üblicherweise bei einer Verschiebung des Ventilsitzelements 30 in Richtung des O-Rings 64 komprimiert. Der Ventilkörper 24 verjüngt sich in axialer Richtung durch einen schrägen Abschnitt, an den eine Regulierkante 68 angeformt ist, die vom Außenumfang des Teils des Ventilkörpers 24 mit dem größeren Außenumfang hervorsteht. Die Regulierkante 68 taucht in das Ventilsitzelement 30 ein, wenn die Wassertemperatur den an der Temperatur-Bedienkappe 54 eingestellten Temperaturwert erreicht und sich das Dehnstoffelement 48 entsprechend ausgedehnt und das Regelglied 26 verschoben hat. Beim Eintauchen der Regulierkante 68 in das Ventilsitzelement 30 wird der Regulierspalt 42 durch das Regelglied 26 maximal verkleinert und der Volumendurchfluss wird auf den voreingestellten Kv-Wert reduziert.

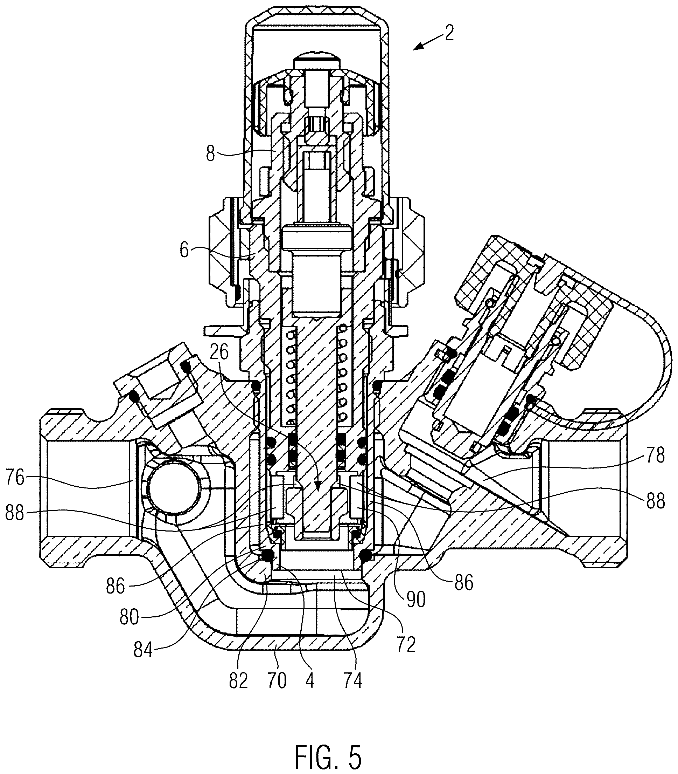

Der Ventileinsatz 2 wird als vorgefertigtes Bauteil in ein Ventilgehäuse 70 eingesetzt (s. Fig. 5). Dabei ist das Ventileinsatz-Unterteil 4 mit seinem eine Eingangsöffnung 72 ausbildenden Ende dichtend in eine Durchgangsöffnung 74 des Ventilgehäuses 70 eingesetzt, die quer zu den Öffnungen des Eingangskanals 76 und des Ausgangskanals 78 orientiert ist und diese beiden Kanäle 76, 78 verbindet. Das Ventileinsatz-Unterteil 4 bildet eine Anlageschulter 80 aus, die zwischen sich und einer Gegenanlageschulter 82 des Ventilgehäuses 70 einen Dichtring 84 einklemmt. Korrespondierend zu den Stegen 36 des Ventileinsatz-Mittelteils 6 bildet das Ventileinsatz-Unterteil 4 sich in axialer Richtung erstreckende Stege 86 aus, die zwischen sich fensterförmige Umfangsöffnungen 88 definieren, die die Ausgangsöffnung 90 des Ventileinsatz-Unterteils 4 bilden.

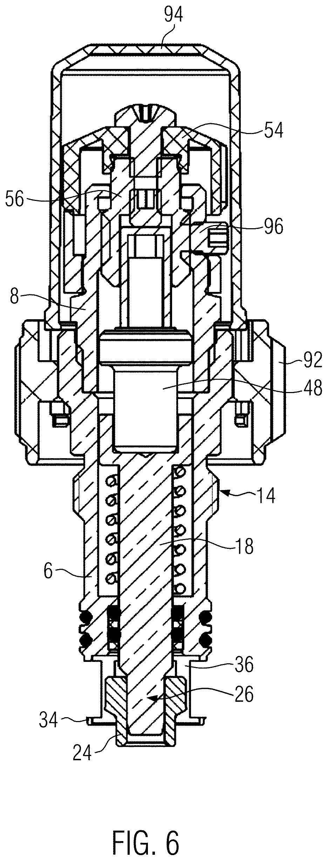

Die Fig. 6 zeigt eine Längsschnittansicht des Ventileinsatzes 2 aus Fig. 1 ohne Ventileinsatz-Unterteil 4. Entsprechend ist nur das Ventileinsatz-Mittelteil 6 und das Ventileinsatz-Oberteil 8 gezeigt. Neben der bereits beschriebenen Temperatur-Bedienkappe 54, die dem Ventileinsatz-Oberteil 8 zugeordnet ist, weist der Ventileinsatz 2 einen Kv-Bedienring 92 auf, der drehfest an dem Ventileinsatz-Mittelteil 6 befestigt ist. Durch Drehen des Kv-Bedienrings 92 wird demnach das Ventileinsatz-Mittelteil 6 gedreht, wodurch es sich zur Voreinstellung des Regulierspaltes 42 je nach Drehrichtung weiter in das Ventileinsatz-Unterteil 2 hinein- oder herausschraubt. Durch eine axiale Verschiebung des Kv-Bedienrings 92 kann die Voreinstellung des Regulierspaltes verriegelt und entriegelt werden. Die Temperatur-Bedienkappe 54 ist durch eine Schutzkappe 94 geschützt. Durch Anziehen einer Feststellschraube 96 kann die Temperatureinstellung an der Temperatur-Bedienkappe 54 verriegelt werden bzw. durch Lösen der Feststellschraube 96 entriegelt werden.

### Bezugszeichenliste

- 2: Ventileinsatz
- 4: Ventileinsatz-Unterteil
- 6: Ventileinsatz-Mittelteil
- 8: Ventileinsatz-Oberteil
- 10: Aufnahmeraum
- 12, 44: Außengewinde
- 14, 46, 58: Innengewinde
- 16, 22, 84: Dichtring
- 18: Ventilschaft
- 20: freies Ende des Ventileinsatz-Mittelteils
- 24: Ventilkörper
- 26: Regelglied
- 28: Regulierabschnitt
- 29: Gleitschale
- 30: Ventilsitzelement
- 32: Schlitz
- 34: Druckring
- 36, 86: Steg
- 38: Außendurchmesser
- 40: Innendurchmesser
- 42: Regulierspalt
- 48: Dehnstoffelement
- 50: Teller
- 52: Feder
- 54: Bedienkappe
- 56: Stellschraube
- 60: obere Ringschulter
- 62: Abstandhalter
- 64: O-Ring
- 66: untere Ringschulter
- 68: Regulierkante
- 70: Ventilgehäuse
- 72: Eingangsöffnung
- 74: Durchgangsöffnung
- 76: Eingangskanal
- 78: Ausgangskanal
- 80: Anlageschulter
- 82: Gegenanlageschulter
- 88: Umfangsöffnung
- 90: Ausgangsöffnung
- 92: Kv-Bedienring
- 94: Schutzkappe
- 96: Feststellschraube
- A: axiale Richtung

## Patentansprüche

1. Regulierventil für Wasser-Zirkulationssysteme, aufweisend ein Ventilgehäuse (70) mit einem Eingangskanal (76) und einem Ausgangskanal (78) und einen in das Ventilgehäuse (70) eingesetzten Ventileinsatz (2), der den Eingangskanal (76) mit dem Ausgangskanal (78) fluidisch verbindet und in dem ein Regelglied (26), das zur Regulierung einer Wasserdurchflussmenge relativ zu einem Ventilsitz stellbar ist, und ein durch eine Wassertemperatur gesteuertes Dehnstoffelement (48) als Stellglied für das Regelglied (26) angeordnet sind, **gekennzeichnet durch** ein den Ventilsitz ausbildendes Ventilsitzelement (30), das im Regulierbetrieb von dem Regelglied (26) axial durchsetzt ist und das zur Voreinstellung eines Regulierspaltes (42) axial verschieblich und/oder elastisch verformbar in dem Ventileinsatz (2) gehalten ist.

2. Regulierventil nach Anspruch 1, **dadurch gekennzeichnet, dass** der Ventileinsatz (2) und das Ventilsitzelement (30) so ausgebildet sind, dass sich das Ventilsitzelement (30) bei einer axialen Verschiebung elastisch verformt, wodurch sich die Größe des Regulierspaltes (42) ändert.

3. Regulierventil nach Anspruch 1 oder 2, **dadurch gekennzeichnet, dass** sich das Ventilsitzelement (30) bei einer axialen Verschiebung elastisch verformt und sich dabei der Innendurchmesser (40) des Ventilsitzelementes (30) verändert.

4. Regulierventil nach Anspruch 2 oder 3, **dadurch gekennzeichnet, dass** dem Ventilsitzelement (30) durch die elastische Verformung eine elastische Rückstellkraft aufgeprägt wird, die bewirkt, dass das Ventilsitzelement (30) ohne äußere Krafteinwirkung in seine Ausgangslage zurückspringt.

5. Regulierventil nach einem der vorherigen Ansprüche, **dadurch gekennzeichnet, dass** das Ventilsitzelement (30) als geschlitzter Ring ausgebildet ist und dass sich der Schlitz (32) bei einer axialen Verschiebung des Ventilsitzelementes (30) in seiner Größe verändert.

6. Regulierventil nach einem der vorherigen Ansprüche, **dadurch gekennzeichnet, dass** das Ventilsitzelement (30) in einem konusförmigen Regulierabschnitt (28) des Ventileinsatzes (2) gehalten ist.

7. Regulierventil nach einem der vorherigen Ansprüche, **dadurch gekennzeichnet, dass** der Ventileinsatz (2) ein Ventileinsatz-Unterteil (4) umfasst, das fest mit dem Ventilgehäuse (70) verbunden ist, eine Eingangsöffnung (72) und eine Ausgangsöffnung (90) aufweist und mit seinem die Eingangsöffnung (72) ausbildenden Ende dichtend in eine Durchgangsöffnung (74) des Ventilgehäuses (70) zwischen dem Eingangskanal (76) und dem Ausgangskanal (78) eingesetzt ist.

8. Regulierventil nach Anspruch 7, **dadurch gekennzeichnet, dass** die Ausgangsöffnung (90) quer zur Eingangsöffnung (72) orientiert ist.

9. Regulierventil nach Anspruch 7 oder 8, **dadurch gekennzeichnet, dass** der Ventileinsatz (2) ein Ventileinsatz-Mittelteil (6) umfasst, das das Regelglied (26) in sich aufnimmt, von dem Ventileinsatz-Unterteil (2) getragen wird und in axialer Richtung (A) relativ zum Ventileinsatz-Unterteil (4) stellbar ist.

10. Regulierventil nach Anspruch 9, **dadurch gekennzeichnet, dass** durch die Stellbewegung des Ventileinsatz-Mittelteils (6) das Ventilsitzelement (30) axial verschoben und/oder elastisch verformt wird.

11. Regulierventil nach Anspruch 10, **gekennzeichnet durch** einen am freien Ende (20) des Ventileinsatz-Mittelteils (6) vorgesehenen Druckring (34) zur Ausübung eines Drucks auf das Ventilsitzelement (30) zur Verschiebung und/oder elastischen Verformung des Ventilsitzelementes (30).

12. Regulierventil nach Anspruch 11, **dadurch gekennzeichnet, dass** ein Innendurchmesser des Druckrings (34) größer ist als ein Außendurchmesser des Regelglieds (26).

13. Regulierventil nach einem der vorherigen Ansprüche, **dadurch gekennzeichnet, dass** ein Außenumfang des Regulierspaltes (42) unabhängig von der Stellung des Regelglieds (26) einstellbar ist.

14. Regulierventil nach Anspruch 13, **dadurch gekennzeichnet, dass** die Einstellung stufenlos ist.

15. Regulierventil nach einem der vorherigen Ansprüche, **dadurch gekennzeichnet, dass** das Regelglied (26) einen Ventilkörper (24) mit einer vom Außenumfang des Ventilkörpers (24) hervorstehenden Regulierkante (68) umfasst und dass das Regulierventil so ausgebildet ist, dass die Regulierkante (68) bei einer an einem Ventileinsatz-Oberteil (8) einstellbaren Wassertemperatur in das Ventilsitzelement (30) eintaucht.

## Claims

1. A regulating valve for water circulation systems, comprising a valve housing (70) with an inlet channel (76) and an outlet channel (78) and a valve insert (2) inserted into the valve housing (70), which connects the inlet channel (76) to the outlet channel (78) in fluid terms and in which are arranged a control element (26), which is adjustable relative to a valve seat for the purpose of regulating a water flow rate, and an expansion element (48), which is controlled by a water temperature and is used as an actuating element for the control element (26), **characterized by** a valve seat element (30) forming the valve seat, through which the control element (26) passes axially in the control mode and which, for the purpose of presetting a control gap (42), is held axially displaceably and/or elastically deformable in the valve insert (2).

2. The regulating valve according to claim 1, **characterized in that** the valve insert (2) and the valve seat element (30) are designed such that the valve seat element (30) is elastically deformed upon axial displacement, causing the size of the control gap (42) to change.

3. The regulating valve according to claim 1 or 2, **characterized in that** the valve seat element (30) is elastically deformed during an axial displacement and the internal diameter (40) of the valve seat element (30) changes in the process.

4. The regulating valve according to claim 2 or 3, **characterized in that** the valve seat element (30) is subjected to an elastic restoring force by the elastic deformation, which causes the valve seat element (30) to spring back into its initial position without the application of external force.

5. The regulating valve according to one of the previous claims, **characterized in that** the valve seat element (30) is designed as a slotted ring and **in that** the slot (32) changes in size when the valve seat element (30) is displaced axially.

6. The regulating valve according to one of the previous claims, **characterized in that** the valve seat element (30) is held in a conical regulating section (28) of the valve insert (2).

7. The regulating valve according to one of the previous claims, **characterized in that** the valve insert (2) comprises a valve insert bottom part (4) which is fixedly connected to the valve housing (70), has an inlet opening (72) and an outlet opening (90) and is inserted with its end forming the inlet opening (72) in a sealing manner into a through-opening (74) of the valve housing (70) between the inlet channel (76) and the outlet channel (78).

8. The regulating valve according to claim 7, **characterized in that** the outlet opening (90) is oriented transversely to the inlet opening (72).

9. The regulating valve according to claim 7 or 8, **characterized in that** the valve insert (2) comprises a valve insert middle part (6) which receives the control element (26) in itself, is carried by the valve insert lower part (4) and is adjustable in the axial direction (A) relative to the valve insert lower part (4).

10. The regulating valve according to claim 9, **characterized in that** the valve seat element (30) is axially displaced and/or elastically deformed by the adjusting movement of the valve insert middle part (6).

11. The regulating valve according to claim 10, **characterized by** a pressure ring (34) provided at the free end (20) of the valve insert middle part (6) for exerting a pressure on the valve seat element (30) for displacement and/or elastic deformation of the valve seat element (30).

12. The regulating valve according to claim 11, **characterized in that** an inner diameter of the pressure ring (34) is larger than an outer diameter of the control element (26).

13. The regulating valve according to one of the previous claims, **characterized in that** an outer circumference of the control gap (42) is adjustable independently of the position of the control member (26).

14. The regulating valve according to claim 13, **characterized in that** the adjustment is infinitely variable.

15. The regulating valve according to any of the preceding claims, **characterized in that** the control element (26) comprises a valve body (24) having a regulating edge (68) projecting from the outer circumference of the valve body (24), and that the regulating valve is designed such that the regulating edge (68) enters into the valve seat element (30) at a water temperature adjustable at a valve insert top part (8).

## Revendications

1. Soupape de régulation pour systèmes de circulation d'eau, comprenant un boîtier de soupape (70) avec un canal d'entrée (76) et un canal de sortie (78) et un insert de soupape (2) qui est inséré dans le boîtier de soupape (70) et relie fluidiquement le canal d'entrée (76) au canal de sortie (78) et au sein duquel un organe de régulation (26) pouvant être ajusté par rapport à un siège de soupape en vue d'une régulation d'un débit d'eau et un élément dilatable (48) commandé par une température d'eau sont agencés pour faire office d'organe d'ajustement pour l'organe de régulation (26), **caractérisée par** un élément de siège de soupape (30) qui forme le siège de soupape et est traversé axialement par l'organe de régulation (26) en mode de régulation et est retenu dans l'insert de soupape (2) de manière à pouvoir coulisser axialement et/ou de manière à pouvoir être déformé élastiquement afin de pré-ajuster un interstice de régulation (42).

2. Soupape de régulation selon la revendication 1, **caractérisée en ce que** l'insert de soupape (2) et l'élément de siège de soupape (30) sont réalisés de sorte que l'élément de siège de soupape (30) se déforme élastiquement lors d'un coulissement axial, ce qui modifie la taille de l'interstice de régulation (42).

3. Soupape de régulation selon la revendication 1 ou 2, **caractérisée en ce que** l'élément de siège de soupape (30) se déforme élastiquement lors d'un coulissement axial et **en ce que** le diamètre intérieur (40) de l'élément de siège de soupape (30) se modifie en conséquence.

4. Soupape de régulation selon la revendication 2 ou 3, **caractérisée en ce qu'**une force de rappel élastique est appliquée à l'élément de siège de soupape (30) du fait de la déformation élastique, ce qui provoque le retour de l'élément de siège de soupape (30) dans sa position initiale sans action de force extérieure.

5. Soupape de régulation selon l'une quelconque des revendications précédentes, **caractérisée en ce que** l'élément de siège de soupape (30) est réalisé sous la forme d'un anneau fendu et **en ce que** la fente (32) change de taille lors d'un coulissement axial de l'élément de siège de soupape (30).

6. Soupape de régulation selon l'une quelconque des revendications précédentes, **caractérisée en ce que** l'élément de siège de soupape (30) est retenu dans une section de régulation (28) en forme de cône de l'insert de soupape (2).

7. Soupape de régulation selon l'une quelconque des revendications précédentes, **caractérisée en ce que** l'insert de soupape (2) comprend une partie inférieure d'insert de soupape (4) qui est reliée de manière fixe au boîtier de soupape (70), présente un orifice d'entrée (72) et un orifice de sortie (90) et est insérée de manière étanche par son extrémité formant l'orifice d'entrée (72) dans un orifice de passage (74) du boîtier de soupape (70) entre le canal d'entrée (76) et le canal de sortie (78).

8. Soupape de régulation selon la revendication 7, **caractérisée en ce que** l'orifice de sortie est orienté transversalement par rapport à l'orifice d'entrée (72).

9. Soupape de régulation selon la revendication 7 ou 8, **caractérisée en ce que** l'insert de soupape (2) comprend une partie centrale d'insert de soupape (6) qui reçoit l'organe de régulation (26), est supportée par la partie inférieure d'insert de soupape (2) et peut être ajustée dans la direction axiale (A) par rapport à la partie inférieure d'insert de soupape (4).

10. Soupape de régulation selon la revendication 9, **caractérisée en ce que** l'élément de siège de soupape (30) est coulissé axialement et/ou déformé élastiquement par le mouvement d'ajustement de la partie centrale d'insert de soupape (6).

11. Soupape de régulation selon la revendication 10, **caractérisée par** une bague de pression (34) fournie au niveau de l'extrémité libre (20) de la partie centrale d'insert de soupape (6) et permettant d'exercer une pression sur l'élément de siège de soupape (30) afin de faire coulisser et/ou déformer élastiquement l'élément de siège de soupape (30).

12. Soupape de régulation selon la revendication 11, **caractérisée en ce que** le diamètre intérieur de la bague de pression (34) est supérieur au diamètre extérieur de l'organe de régulation (26).

13. Soupape de régulation selon l'une quelconque des revendications précédentes, **caractérisée en ce qu'**une circonférence extérieure de l'interstice de régulation (42) peut être ajustée indépendamment de la position de l'organe de régulation (26).

14. Soupape de régulation selon la revendication 13, **caractérisée en ce que** l'ajustement est continu.

15. Soupape de régulation selon l'une quelconque des revendications précédentes, **caractérisée en ce que** l'organe de régulation (26) comprend un corps de soupape (24) avec une arête de régulation (68) dépassant de la circonférence extérieure du corps de soupape (24) et **en ce que** la soupape de régulation est réalisée de sorte que l'arête de régulation (68) plonge dans l'élément de siège de soupape (30) lorsque la température d'eau peut être ajustée au niveau d'une partie supérieure d'insert de soupape (8).
